# EUROPEAN PATENT APPLICATION

(11) **EP 2 505 717 A1**
(43) Date of publication of application: **03.10.2012**
(21) Application number: 10833053.1
(22) Date of filing: 05.11.2010
(51) Int. Cl.: E02B 3/06

(54) **WAVE ABSORBING DEVICE**

(30) Priority: 24.11.2009 JP 2009266714
(71) Applicant: Onda, Ginjirou, Tokyo 134-0083 (JP)
(72) Inventor: Onda, Ginjirou, Tokyo 134-0083 (JP)
(74) Representative: Novagraaf Technologies
(86) International application number: PCT/JP2010/069715
(87) International publication number: WO 2011/065206

(57) **Abstract**

Provided is a wave absorbing device which exerts a reliable and effective action of wave absorption, thereby preventing possible damages due to tsumami, high waves, and the like, and allowing a sandy beach to be grown. A wave absorbing device comprising one or more wave absorbing bodies (1; 1a) having an inflow side face (2) formed by removing part of a cylindrical body along the longitudinal direction and a C-shaped cross section, to be installed underwater in a relatively shallow shore with the inflow side face (2) being oriented against the wave progress direction and inclined with respect to the wave progress direction. A longer wave absorbing body (1) is provided with oblong relief holes (4) formed at appropriate intervals, and a number of shorter wave absorbing bodies (1a) are disposed in a straight line, the adjacent opening ends being opposed in proximity to each other with a gap (5) being held therebetween, thereby, when a wave hits the offing side end thereof, a flow is created in the inside of the wave absorbing body by a water flow pressure difference caused between the inside of the offing side end and that of the land side end thereof.

## Description

### FIELD OF THE INVENTION

The present invention relates to a wave absorbing device, and more particularly, to a wave absorbing device installed underwater in sea or river to exert the wave absorbing capability, thereby preventing possible damages due to tsunami, high waves, and the like.

### BACKGROUND OF THE INVENTION

In order to prevent possible damages resulting from tsunami, high waves, and the like, various wave absorbing devices to be installed in a relatively shallow shore have been disclosed. Examples include a breakwater wherein a plurality of V-shaped bent bank bodies are provided in parallel with one another, being exposed from the water surface, and between adjacent bank bodies, a V-shaped bent water channel is provided (Japanese Unexamined Patent Application Publication No. Hei 6-212611), and a wave absorbing structure comprising one or more wave absorbing units which are each formed in the shape of an arc (substantially in the shape of a hemisphere) against a wave in any coming direction, and provided with a hollow chamber in the inside thereof, the hollow chamber being communicated with the seawater through an opening provided in the portion to be opposed to a wave in a typical coming direction (Japanese Unexamined Patent Application Publication No. Hei 10-237842).

These conventional wave absorbing devices are expensive in and of themselves due to their structures; are time-consuming for installation; and involve an increased total cost. To eliminate such drawbacks, the present inventor has already disclosed a wave absorbing method and a wave absorbing device, having a simple structure, being relatively low in cost of the device itself and installation cost, and yet providing an effective wave absorbing effect (Japanese Patent Publication No. 3609052).

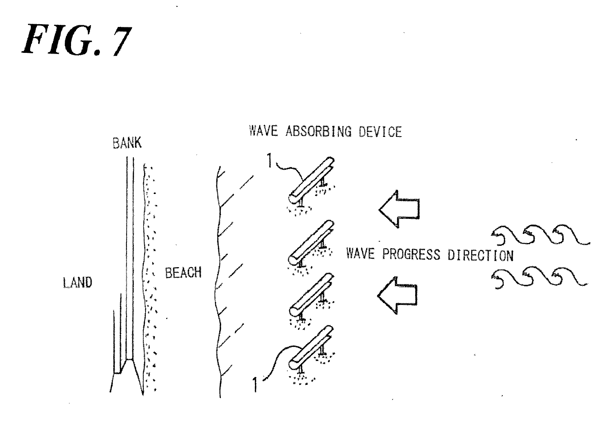

The wave absorbing device in accordance with the invention as disclosed in Japanese Patent Publication No. 3609052 is a wave absorbing device comprising one or more wave absorbing bodies having an open side extending in the longitudinal direction and a C-shaped cross section, to be installed underwater in a relatively shallow shore with the open side being oriented against the wave progress direction and inclined with respect to the wave progress direction, and thereby, on the wave hitting the offing side end of the wave absorbing body, allowing a flow to be created in the wave absorbing body by a water flow pressure difference caused between the inside of the offing side end of the wave absorbing body and the inside of the land side end thereof. (Figure 7 to be referenced).

Thus, with the wave absorbing device as disclosed with Japanese Patent Publication No. 3609052, one or more wave absorbing bodies having an open side extending in the longitudinal direction and a C-shaped cross section, are installed underwater lined up in a row in a relatively shallow shore with the open side being oriented against the wave progress direction and inclined at 45 degrees with respect to the wave progress direction, thereby a great gap being produced between wave absorbing bodies. (Figure 7 to be referenced). Therefore, a wave may pass through the gap to have an ill effect on the wave absorption action of the device.

### SUMMURY OF THE INVENTION

### Technical Problem

As described above, with the wave absorbing device as disclosed with Japanese Patent Publication No. 3609052, a wave may pass through the gap to have an ill effect on the wave absorption effect. Then, it is an object of the present invention to provide a wave absorbing device which is free from such a problem, exerts a reliable and effective wave absorbing action, thereby preventing possible damages by tsunami, high waves, and the like, and allowing a sandy beach to be grown.

### Means for Solving the Problem

The invention according to claim 1 to solve the aforementioned problem is a wave absorbing device comprising one or more wave absorbing bodies having an inflow side face formed by removing part of a cylindrical body along the longitudinal direction and a C-shaped cross section, to be installed underwater in a relatively shallow shore with the inflow side face being oriented against the wave progress direction and inclined with respect to the wave progress direction; the wave absorbing body being available as a longer wave absorbing body or a shorter wave absorbing body; the longer wave absorbing body being provided with oblong relief holes formed at appropriate intervals; on a plurality of shorter wave absorbing bodies being used, the respective shorter wave absorbing bodies being disposed in a straight line, the adjacent opening ends being opposed in proximity to each other with a gap being held therebetween, thereby, on a wave hitting the offing side end of the longer wave absorbing body or the offing side end of a row of the shorter wave absorbing bodies, a flow being created in the inside of the longer wave absorbing body or the inside of the row of the shorter wave absorbing bodies by a water flow pressure difference caused between the inside of the offing side end of the longer wave absorbing body and the inside of the land side end thereof, or between the inside of the offing side end of the row of the shorter wave absorbing bodies and the inside of the land side end of thereof.

In one embodiment, a sub-wave absorbing body having the same geometry as that of the wave absorbing body, and the same diameter as or a smaller diameter than that of the wave absorbing body is connected onto the top and/or the bottom of the wave absorbing body with an appropriate gap being provided. In addition, the wave absorbing body has fixing piles, being fixed in the sea by means of the fixing piles.

### Advantages of the Invention

As can be seen from the above description of the present invention, when a wave hits the offing side end of a longer wave absorbing body or the offing side end of a row of shorter wave absorbing bodies, a flow is produced in the inside of the longer wave absorbing body or the inside of the row of the shorter wave absorbing bodies by a water flow pressure difference caused between the land side end of the longer wave absorbing body or between the land side end of the row of the shorter wave absorbing bodies, with no wave being unnecessarily passed through the relief hole in the longer wave absorbing body or the gap between shorter wave absorbing bodies to have an ill effect on the wave absorbing action; thus the wave absorbing effect being reliably and effectively provided, thereby possible damages due to tsunami, high waves, and the like, being minimized, and a sandy beach being allowed to be grown.

### BRIEF DESCRIPTION OF THE DRAWINGS

Figure 1 is a perspective side view of one Example of a wave absorbing device in accordance with the present invention;

Figure 2 is a perspective side view of another Example of the wave absorbing device in accordance with the present invention;

Figure 3 is a perspective side view of still another Example of the wave absorbing device in accordance with the present invention;

Figure 4 is a view illustrating an installation method for the wave absorbing device in accordance with the present invention;

Figure 5 is a view illustrating an installation method for the wave absorbing device in accordance with the present invention;

Figure 6 is a view illustrating the operating state of the wave absorbing device in accordance with the present invention; and

Figure 7 is a view illustrating the operating state of the wave absorbing device as disclosed with Japanese Patent Publication No. 3609052.

### BEST MODE FOR CARRYING THE INVENTION

A preferred embodiment of the present invention will be explained with the reference to the accompanying drawings. The wave absorbing device in accordance with the present invention is a wave absorbing device comprising one or more wave absorbing bodies 1, 1a having an inflow side face 2 formed by removing part of a cylindrical body along the longitudinal direction and a C-shaped cross section, to be installed underwater in a relatively shallow shore, with the inflow side face 2 being oriented against the wave progress direction and inclined at, for example, 40 degrees with respect to the wave progress direction.

The wave absorbing body is available as a longer wave absorbing body 1 or a shorter wave absorbing body 1a, and, in application, one or more longer wave absorbing bodies 1 are arranged in a straight line, and a number of shorter wave absorbing bodies 1a are arranged in a straight line. The respective wave absorbing bodies 1, 1a are provided with fixing piles 3 which extend from the bottom or rear face in a downward direction, and the respective wave absorbing bodies 1, 1a are fixed in the sea by means of these fixing piles 3.

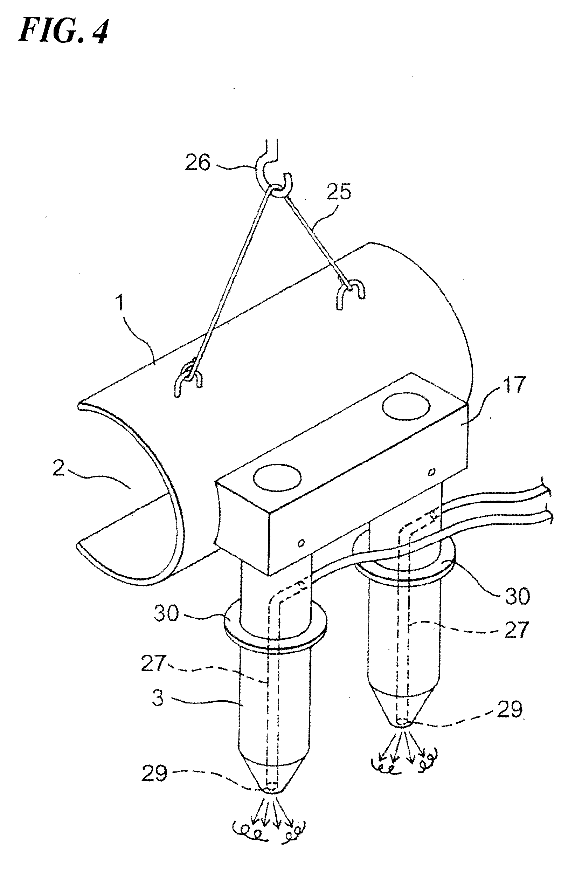

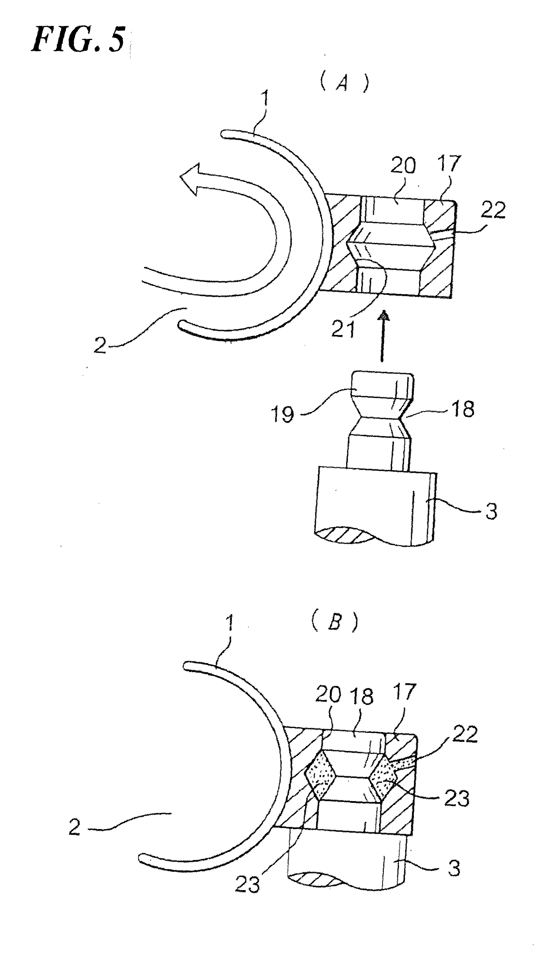

For example, as shown in Figure 4 and Figure 5, the fixing pile 3 is mounted to a fixing pile mounting portion 17 provided on the rear face of the wave absorbing body 1, 1a. In the upper portion of the fixing pile 3, an inserting portion 19 having an annular neck portion 18 is formed, and in the fixing pile mounting portion 17, an inserting hole 20 for inserting the inserting portion 19 is formed. And, in the middle portion of the inserting hole 20, an annular V-grooved portion 21 is formed, and an injection passage 22 communicating from the annular V-grooved portion 21 to the outside face is formed.

In mounting the fixing pile 3, the inserting portion 19 thereof is inserted into the inserting hole 20, and thereafter, from the injection passage 22, a bonding agent 23, such as resin, mortar, or the like, is injected. The bonding agent 23 fills up the annular space having a cross-sectional shape of a diamond that is formed by the annular V-grooved portion 21 and the annular neck portion 18, and is solidified. Thus, the fixing pile 3 is firmly fixed such that it will not be dropped off from the fixing pile mounting portion 17.

The installation operation for the wave absorbing body 1, 1a equipped with such fixing piles 3 is performed by disposing a suspending means 25, such as a wire, or the like, on the top of the wave absorbing body 1, 1a, and applying a crane hook 26 thereto to suspend the wave absorbing body 1, 1a for lowering it down to the sea bottom (Figure 4 to be referenced). In order to allow the operation for installation into the sea bottom, including the installation height adjustment, to be made easily and rapidly, a water channel 27 extending along the longitudinal direction of the fixing pile 3 is formed therein, and into this water channel 27, high-pressure water is supplied.

The supplied high-pressure water is injected from an injection nozzle 29 at the tip of the water channel toward the sea bottom to blow up the sand in front thereof. Thereby, a hole for embedding the fixing pile 3 is formed, and thus by lowering the wave absorbing body 1, 1a, the fixing pile 3 can be easily and smoothly driven into the embedding hole. Once the fixing pile 3 is embedded to a desired depth, the supply of the high-pressure water is stopped, and the crane hook 26 is removed, then immediately thereafter, the sand around the fixing pile 3 is tightened, thereby the fixing pile 3 being firmly fixed.

If a stopper 30 which is extended in a radial direction is provided in the middle portion of the fixing pile 3, further sinking of the fixing pile 3 before the sand therearound being tightened during the installation can be positively prevented. In addition, also when the wave absorbing body 1, 1a is to be moved from one installation location to another, or when the level of the wave absorbing body 1, 1a from above the sea bottom is to be adjusted, supplying of high-pressure water into the water channel 27 in the fixing pile 3 in the same way will blow the surrounding sand loose, thereby allowing the fixing pile 3 to be easily drawn up or extracted.

The wave absorbing body 1, 1a is sized, depending upon the scale of high waves or tsunami that can be expected for the installation location; for example, the longer wave absorbing body 1 can be sized to be approx. 15 m in length, and approx. 2 to 5 m in diameter, while, the shorter wave absorbing body 1a can have a length of approx. 3 m, and a diameter of approx. 2 to 5 m.

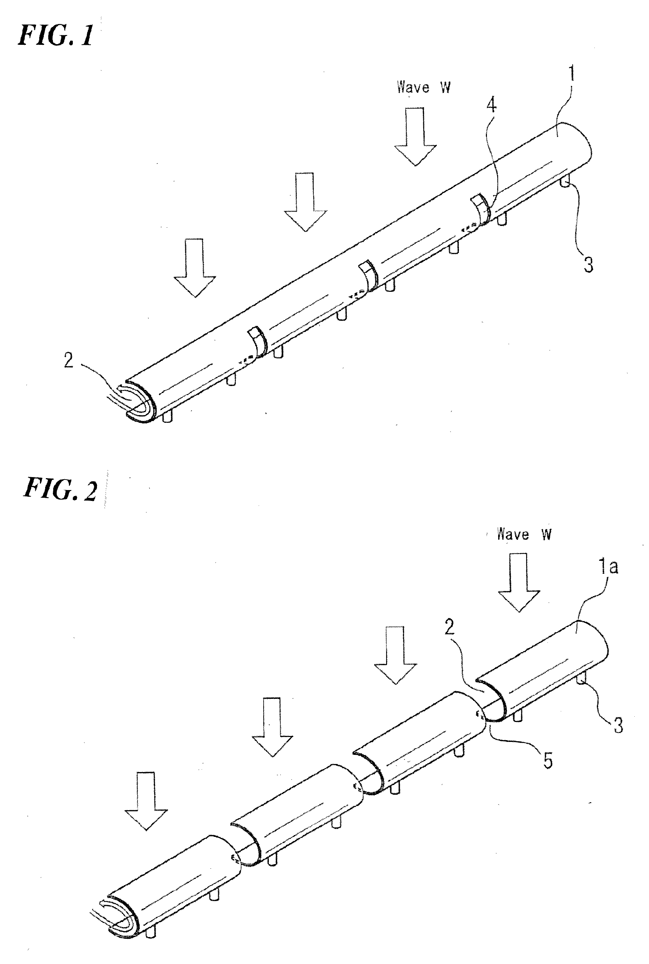

In the longer wave absorbing body 1, oblong relief holes 4 are formed at appropriate intervals such that part of any wave flowing in the inside of the longer wave absorbing body 1 can flow out the rethrough (Figure 1 to be referenced). Thus, by providing the relief holes 4, any wave flowing into the longer wave absorbing body 1 is broken to be easily dispersed, the wave absorbing action being promoted. In addition, at the same time, the longer wave absorbing body 1 is prevented from being damaged by an excessive water flow pressure which would be applied without the relief holes 4.

In addition, when a number of shorter wave absorbing bodies 1a are used, being arranged, the respective shorter wave absorbing bodies 1a are arranged in a straight line, the adjacent opening ends being opposed in proximity to each other with an appropriate gap 5 being held (Figure 2 to be referenced). The gap 5 exerts the same action as the relief hole 4, and by part of the wave being allowed to flow out from the gap 5, the wave absorbing action is promoted, and the shorter wave absorbing body 1a is prevented from being damaged by an excessive water flow pressure which would be applied without the gap 5.

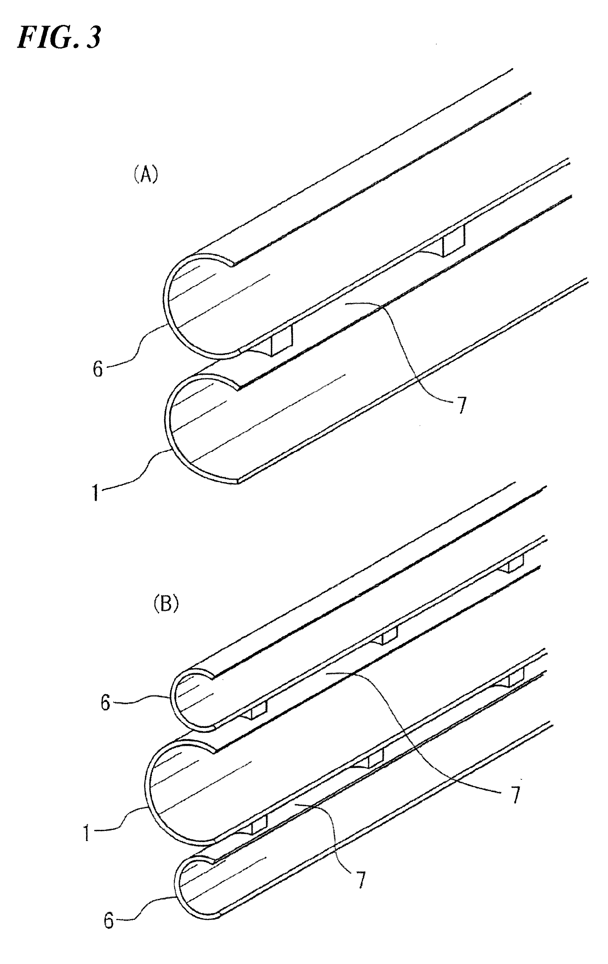

The geometry of the end of the respective wave absorbing body 1, 1a is generally C-shaped, as described above, however, a sub-wave absorbing body 6, which is formed of a C-shaped cylinder having the same size or a smaller diameter, may be connected onto the top or bottom of the wave absorbing body 1, 1a (Figure 3A), or onto both top and bottom thereof (Figure 3B) with an appropriate gap 7 (Figure 3B). Also in this case, the longer wave absorbing body 1 is provided with the aforementioned oblong relief holes 4, and the shorter wave absorbing bodies 1a are connected to one another with the gap 5 being held. The gap 7 exerts the same action as the aforementioned relief hole 4 and the gap 5.

As described above, one or more longer wave absorbing bodies 1 are disposed in a straight line, being arranged, and a number of shorter wave absorbing bodies 1a are disposed in a straight line, being arranged, the respective wave absorbing bodies 1, 1a are installed underwater in a relatively shallow shore by means of the fixing pile 3.

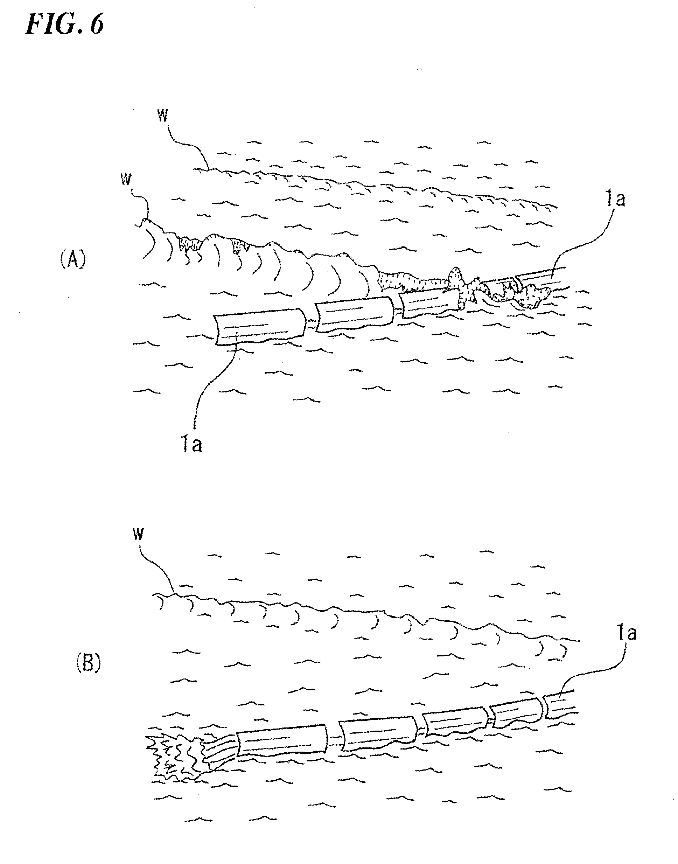

When a wave w comes against the wave absorbing device thus installed, the wave w first hits the nearest (offing side) end of the longer wave absorbing body 1 or that of the row of shorter wave absorbing bodies 1a, being installed inclined at, for example, 40 degrees with respect to the progress direction of the wave w, the water flow pressure being the highest at that end when the longer wave absorbing body 1 or the row of shorter wave absorbing bodies 1a is viewed as a whole. Therefore, there occurs a great difference in water flow pressure between the nearest and farthest ends of the longer wave absorbing body 1 or those of the row of shorter wave absorbing bodies 1a, and thus, in the longer wave absorbing body 1 or the row of shorter wave absorbing bodies 1a, a flow is caused from the offing side, where the water flow pressure is higher, to the land side, where the water flow pressure is lower, thereby the mountain of the wave w is broken (Figure 6A to be referenced) into waves with decreased heights being sequentially passed through the longer wave absorbing body 1 or the row of shorter wave absorbing bodies 1a (Figure 6B to be referenced).

This phenomenon occurs over the overall length of the longer wave absorbing body 1 or the row of shorter wave absorbing body 1a as the wave w progresses. Furthermore, when the mountain of the wave w comes near the middle of the longer wave absorbing body 1 or the row of shorter wave absorbing bodies 1a, the wave w is divided into water flows in both forward and backward directions in the longer wave absorbing body 1 or the row of shorter wave absorbing bodies 1a. Thereby, while the wave w passes through the longer wave absorbing body 1 or the row of shorter wave absorbing bodies 1a, the phenomenon of reduction in wave height sequentially occurs, an effective wave absorption is achieved as a whole.

Hereinabove, the present invention has been explained in detail to some extent, and about the most preferred embodiment, however, since it is obvious that a wide range of different embodiments can be made without departing from the spirit and scope of the present invention, it is to be understood that the present invention is not limited to the specific embodiments thereof except as defined in the appended claims.

## Claims

1. A wave absorbing device comprising one or more wave absorbing bodies (1;1a) having an inflow side face (2) formed by removing part of a cylindrical body along the longitudinal direction and a C-shaped cross section, to be installed underwater in a relatively shallow shore with the inflow side face (2) being oriented against the wave progress direction and inclined with respect to the wave progress direction; the wave absorbing body (1;1a) being available as a longer wave absorbing body (1) or a shorter wave absorbing body (1a); the longer wave absorbing body (1) being provided with oblong relief holes (4) formed at appropriate intervals; on a plurality of shorter wave absorbing bodies (1a) being used, the respective shorter wave absorbing bodies (1a) being disposed in a straight line, the adjacent opening ends being opposed in proximity to each other with a gap (5) being held the rebetween, thereby, on a wave hitting the offing side end of the longer wave absorbing body (1) or the offing side end of a row of the shorter wave absorbing bodies (1a), a flow being created in the inside of the longer wave absorbing body (1) or the inside of the row of the shorter wave absorbing bodies (1a) by a water flow pressure difference caused between the inside of the offing side end of the longer wave absorbing body (1) and the inside of the land side end thereof, or between the inside of the offing side end of the row of the shorter wave absorbing bodies (1a) and the inside of the land side end of thereof.

2. The wave absorbing device according to claim 1, **characterized in that** a sub-wave absorbing body (6) having the same geometry as that of the wave absorbing body (1; 1a), and the same diameter as or a smaller diameter than that of the wave absorbing body (1; 1a) is connected onto the top and/or the bottom of the wave absorbing body (1; 1a) with an appropriate gap (7) being provided.

3. The wave absorbing device of claim 1 or 2, **characterized in that** the wave absorbing body (1; 1a) has fixing piles (3), being fixed in the sea by means of the fixing piles (3).

4. The wave absorbing device according to claim 3, **characterized in that** the fixing pile (3) is mounted to the wave absorbing body (1; 1a) by means of a fixing pile mounting portion (17) installed at the rear face of the wave absorbing body (1; 1a).
